# EUROPEAN PATENT APPLICATION

(11) **EP 4 668 051 A1**
(43) Date of publication of application: **24.12.2025**
(21) Application number: 25182998.2
(22) Date of filing: 16.06.2025
(51) Int. Cl.: G06F 1/16, G06K 19/077, H01R 13/6581, H04M 1/02, H05K 5/02

(54) **ELECTRONIC DEVICE AND MEDIUM CASING DEVICE**

(30) Priority: 17.06.2024 JP 2024097670
(71) Applicant: Nintendo Co., Ltd., Kyoto 601-8501 (JP)
(72) Inventor: GOTO, Hiroki, Kyoto, 601-8501 (JP); IKUTA, Hiroki, Kyoto, 601-8501 (JP); HIROSE, Shinji, Kyoto, 601-8501 (JP); MINAGAWA, Shinta, Kyoto, 601-8501 (JP)
(74) Representative: Bardehle Pagenberg Partnerschaft mbB Patentanwälte Rechtsanwälte

(57) **Abstract**

To provide electronic device that can better prevent leakage of noise from storage medium housed inside casing. Electronic device includes casing configured to carry storage medium therein, casing having insertion opening for inserting storage medium, at least part of casing being conductive, and lid configured to take open position in which insertion opening is opened and close position in which insertion opening is closed, at least part of lid being conductive, wherein casing is electrically connected to conductor having surface area larger than that of casing, and lid is electrically connected to casing when lid is in close position.

## Description

### TECHNICAL FIELD

The present disclosure relates to an electronic device and a medium casing device including a casing capable of housing a storage medium.

### BACKGROUND ART:

Conventionally, there has been an electronic device on which a storage medium is mounted removably. For example, Patent Document 1 discloses a portable electronic device including a card slot on which an SD card, which is an example of a storage medium, is mounted, and a card slot cover that is made of resin and covers the opening of the card slot.

### Patent Documents

Patent Document 1: JP 2006-195633 A

### SUMMARY

### Problems to be Solved by the Invention

In the portable electronic device described above, there is room for improvement in relation to the structure for preventing the leakage of noise caused by the communication of the storage medium to the external, while the storage medium (e.g., an SD card) is mounted on the card slot.

Therefore, an object of the present disclosure is to solve the problem described above, and to provide an electronic device and a medium casing device that can better prevent the leakage of noise from a storage medium housed inside a casing.

### Solutions to the Problems

In order to achieve the above object, the electronic device and the medium casing device according to the present disclosure may have the configurations (1) to (16) described below, for example.
(1) A configuration example of an electronic device according to the present disclosure is an electronic device comprising:
   a casing configured to carry a storage medium therein, the casing having an insertion opening for inserting the storage medium, at least a part of the casing being conductive; and
   a lid configured to take an open position with the insertion opening opened and a close position the insertion opening closed, at least a part of the lid being conductive, wherein
   the casing is electrically connected to a conductor having a surface area larger than that of the casing, and
   the lid is electrically connected to the casing when the lid is in the close position.
   In the configuration according to (1) described above, the casing is conductive, and is electrically connected to the conductor having a surface area larger than the surface area of the casing. Therefore, when the potential of the conductor is at a reference potential of the electronic device, the casing that is electrically connected to the conductor is also brough to the reference potential. The casing therefore serves as an electromagnetic shield for the storage medium housed inside the casing. Furthermore, at least a part of the lid is conductive, and, when the lid is at the close position, the insertion opening of the casing is closed by the lid, and the lid is electrically connected to the conductor via the casing. Therefore, the potential of the lid at the close position is also brought to the reference potential, in the same manner as the casing, and serves as an electromagnetic shield for the storage medium housed inside the casing. As a result, when the storage medium is housed inside the casing and the lid is at the close position, the lid serves to suppress the leakage of noise from the storage medium to the external through the insertion opening. On the basis of the above, it is possible to further prevent the leakage of noise from the storage medium housed inside the casing.
(2) In the configuration according to (1) described above,
   the lid may be electrically disconnected from the casing when the lid is in the open position, and the configuration example of the electronic device according to the present disclosure may further include a detection unit detecting whether the lid is in the open position or in the close position based on the electrical connection/disconnection between the lid and the casing.
   With the configuration according to (2) described above, it is possible detect that the lid is at the same potential as the conductor or that the lid is at a ground potential using the detection unit. In this manner, it is possible to detect whether the lid is at the close position without using a complicated mechanism.
(3) In the configuration according to (1) or (2) described above,
   the one configuration example of the electronic device according to the present disclosure may further include an insulating cover placed over at least a part of the lid to prevent the lid from being exposed to external when the lid is in the close position.
   With the configuration according to (3), the cover can keep the lid protected.
(4) In the configuration according to (3) described above,
   the one configuration example of the electronic device according to the present disclosure may further include a housing having the casing installed, comprising a first wall and a second wall facing each other, wherein
   the cover comprises
   a first protrusion protruding in to the housing, and being positioned between the casing and the first wall, when the lid is in the close position, and
   a second protrusion protruding in to the housing, and being positioned between the casing and the second wall, when the lid is in the close position.
   With the configuration according to (4) described above, with the first protrusion coming into contact with the first wall while the lid is at the close position, a positional displacement of the lid and the cover in a direction toward the first wall is suppressed. Furthermore, with the second protrusion coming into contact with the second wall while the lid is at the close position, a positional displacement of the lid and the cover in a direction toward the second wall is suppressed.
(5) In the configuration according to any one of (1) to (4) described above, the one configuration example of the electronic device according to the present disclosure may further include an antenna component provided adjacently to the casing.
   As described earlier, when the lid is at the close position, the lid is electrically connected to the casing so as to further prevent the leakage of noise from the storage medium housed inside the casing. Hence, in a configuration in which the antenna component is positioned adjacently to the casing, the antenna component can be kept less affected by the noise from the storage medium.
(6) In the configuration according to any one of (1) to (5) described above, the one configuration example of the electronic device according to the present disclosure may further include:
   a housing having an outer wall with a longitudinal direction and a short-hand direction, and comprising a window defined in the outer wall; and
   an antenna component inside the housing close to the outer wall, wherein
   the casing is located inside the housing, with the insertion opening exposed to external of the housing through the window, and
   the casing and the antenna component are on the same half side with respect to a center of the outer wall along the longitudinal direction.
   As described earlier, when the lid is at the close position, the lid is electrically connected to the casing so as to further prevent the leakage of noise from the storage medium housed inside the casing. Therefore, in the configuration in which the casing and the antenna component are positioned on the same side with respect to the center of the outer wall in the longitudinal direction, the antenna component can be kept less affected by the noise from the storage medium.
(7) In the configuration according to any one of (1) to (6) described above, the one configuration example of the electronic device according to the present disclosure may further include an alert unit alerting that the storage medium is inserted inside the casing and that the lid is not in the close position.
   With the configuration according to (7), the alert unit alerts that the storage medium is housed inside the casing, and that the lid is not at the close position. As a result, for example, when the lid is not at the close position although the storage medium is housed inside the casing, it is possible to prompt a user of the electronic device to move the lid to the close position to close the insertion opening. Because the insertion opening is closed by the lid, it is possible to prevent the leakage of noise from the storage medium housed inside the casing even further. As a result, for example, it is possible to suppress a drop in the communication speed of the electronic device, resultant of the noise from the storage medium.
(8) In the configuration according to any one of (1) to (7) described above, the one configuration example of the electronic device according to the present disclosure may further include:
   a housing installing the casing therein; and
   a slider configured to slide between an intruded position with the slider intruded into the housing, and an extruded position with at least a part of the slider extruded from the housing, wherein
   the lid is attached to the slider directly or indirectly,
   the lid is in the close position when the slider is in the intruded position, and
   the lid is in the open position when the slider is in the extruded position.
   With the configuration according to (8) described above, because the lid keeps the insertion opening open, it is possible to insert the storage medium into the casing and to remove the storage medium from the casing, smoothly.
(9) In the configuration according to any one of (1) to (8) described above,
   the lid may include
   a closing wall configured to close the insertion opening when the lid is in the close position, and
   a first side wall and a second side wall both extending, in an insertion direction defined as a direction for inserting the storage medium, from the closing wall such that the first side wall and a second side wall face each other in a first direction orthogonal to the insertion direction, and
   the casing comprises
   a first partition wall and a second partition wall facing each other in the first direction with the insertion opening provided between the first partition wall and the second partition wall, each of the first partition wall and the second partition wall extending in the insertion direction, and the first partition wall and the second partition wall define a space for carrying the storage medium, and wherein
   when the lid is in the close position, at least a part of the first side wall and at least a part of the first partition wall overlap each other in the first direction, and, at least a part of the second side wall and at least a part of the second partition wall overlap each other in the first direction.
   With the configuration according to (9), when the lid is at the close position, at least a part of the first side wall and a part of the first partition wall overlap each other in a view in the first direction, and at least a part of the second side wall and a part of the second partition wall overlap each other in a view in the first direction. As a result, the noise shielding performance between the internal and the external of the casing can be improved, in the two sections where these parts overlap each other.
(10) In the configuration (9) described above,
   one of the first side wall and the first partition wall comprises a first engaging portion engaging to the other one of the first side wall and the first partition wall, and
   one of the second side wall and the second partition wall comprises a second engaging portion engaging to the other one of the second side wall and the second partition wall.
   With the configuration according to (10) described above, with the first engaging portion engaging the first side wall and the first partition wall, the lid and the casing can be electrically connected to each other, and the lid can be kept at the close position. In the same manner, with the second engaging portion engaging the second side wall and the second partition wall, the lid and the casing can be electrically connected to each other, and the lid can be kept at the close position. In other words, the first engaging portion and the second engaging portion can serve not only a function for electrically connecting the lid and the casing but also a function for keeping the lid at the close position. As a result, the number of components of the electronic device can be reduced, and the manufacturing cost of the electronic device can be reduced.
(11) In the configuration according to (10) described above,
   at least one of the first engaging portion and the second engaging portion is a leaf spring, and
   when the lid is in the close position, the leaf spring comes into contact with a counterpart engaging portion, so as to press the counterpart engaging portion by an elastic restoring force of the leaf spring.
   With the configuration according to (11) described above, it is possible to implement the configuration that serves to provide both of the function for electrically connecting the lid and the casing and the function for holding the lid at the close position, using a leaf spring that is a not complicated structure.
(12) In the configuration according to any one of (9) to (11) described above,
   the lid further comprises
   a third side wall and a fourth side wall extending from the closing wall in the insertion direction, the third side wall and the fourth side wall facing each other in a second direction orthogonal to the insertion direction and intersecting with the first direction,
   the casing further comprises
   a third partition wall and a fourth partition wall facing each other in the second direction with the insertion opening provided between the third partition wall and the fourth partition wall, each of the third partition wall and the fourth partition wall extending in the insertion direction, and the third partition wall and the fourth partition wall define a space for carrying the storage medium, and wherein
   when the lid is in the close position, at least a part of the third side wall and at least a part of the third partition wall overlap each other in the second direction, and, at least a part of the fourth side wall and at least a part of the fourth partition wall overlap each other in the second direction.
   With the configuration according to (12), when the lid is at the close position, at least a part of the third side wall and a part of the third partition wall overlap each other in a view in the second direction, and at least a part of the fourth side wall and a part of the fourth partition wall overlap each other in a view in the second direction. As a result, the noise shielding performance between internal and external of the casing can be improved, in the four sections where these parts overlap each other, along with the configuration according to (10).
(13) In the configuration (12) described above,
   one of the third side wall and the third partition wall comprises
   a third engaging portion engaging to the other one of the third side wall and the third partition wall.
   With the configuration according to (13) described above, with the third engaging portion engaging the third side wall and the third partition wall, the lid and the casing can be electrically connected to each other, and the lid can be kept at the close position. In other words, the third engaging portion can serve not only the function for electrically connecting the lid and the casing but also the function for keeping the lid at the close position. As a result, the number of components of the electronic device can be reduced, and the manufacturing cost of the electronic device can be reduced.
(14) In the configuration according to (13) described above,
   the third engaging portion is a leaf spring, and
   when the lid is in the close position, the leaf spring comes into contact with a counterpart engaging portion, so as to press the counterpart engaging portion by an elastic restoring force of the leaf spring.
   With the configuration according to (14) described above, it is possible to implement the configuration that serves to provide both of the function for electrically connecting the lid and the casing and the function for holding the lid at the close position, using a leaf spring that is a not complicated structure.
(15) In the configuration according to any one of (1) to (14) described above,
   the casing is electrically connected to the conductor at a ground potential..
   With the configuration according to (15), the casing is conductive, and electrically connected to the ground potential. The casing therefore serves as an electromagnetic shield for the storage medium housed inside the casing.
(16) In the configuration according to any one of (1) to (15) described above,
   the casing is electrically connected to a ground pattern, and the ground pattern has a larger surface area than a surface area of the conductive part of the casing.
(17) A configuration example of an electronic device according to the present disclosure is an electronic device including:
   a casing configured to carry a storage medium therein, the casing having an insertion opening for inserting the storage medium, at least a part of the casing being conductive; and
   a lid configured to take an open position with the insertion opening opened and a close position with the insertion opening closed, at least a part of the lid being conductive, wherein
   the casing is electrically connected to a ground potential of the electronic device, and
   the lid is electrically connected to the casing when the lid is in the close position.
   With the configuration according to (17), the casing is conductive, and is electrically connected to the ground potential. The casing therefore serves as an electromagnetic shield for the storage medium housed inside the casing. Furthermore, at least a part of the lid is conductive, and, when the lid is at the close position, the insertion opening of the casing is closed by the lid, and the lid is electrically connected to the ground potential via the casing. Therefore, the lid at the close position also serves as an electromagnetic shield for the storage medium housed inside the casing, in the same manner as the casing. As a result, when the storage medium is housed inside the casing and the lid is at the close position, the lid serves to suppress the leakage of noise from the storage medium to the external through the insertion opening. On the basis of the above, it is possible to further prevent the leakage of noise from the storage medium housed inside the casing.
(18) A configuration example of a medium casing device according to the present disclosure includes:
   casing configured to carry a storage medium therein, the casing having an insertion opening for inserting the storage medium, and at least a part of the casing being conductive; and
   a lid configured to take an open position with the insertion opening opened and a close position with the insertion opening closed, at least a part of the lid being conductive, wherein
   the lid is electrically connected to the casing when the lid is in the close position.
   With the configuration according to (18) described above, the lid closes the insertion opening when the lid is at the close position, and is electrically connected to the casing. As a result, by moving the lid to the close position while the storage medium is inside the casing, the storage medium is surrounded by the conductive members having the same potential, advantageously. By setting the casing to the ground potential, the casing and the lid can be provided with the function as an electromagnetic shield for the storage medium housed inside the casing. As a result, it is possible to further prevent the leakage of noise from the storage medium housed inside the casing.

### Effects of the Invention

With the electronic device and the medium casing device according to the present disclosure, it is possible to further prevent the leakage of noise from the storage medium housed inside the casing.

### BRIEF DESCRIPTION OF DRAWINGS

Fig. 1 is a front view schematically illustrating an electronic device according to an embodiment of the present disclosure;
Fig. 2 is a perspective view schematically illustrating the electronic device according to the embodiment of the present disclosure;
Fig. 3 is a plan view schematically illustrating the electronic device according to the embodiment of the present disclosure;
Fig. 4 is a cross-sectional view taken along line IV-IV in Fig. 3;
Fig. 5 is a perspective view schematically illustrating a part of a casing and a housing;
Fig. 6 is a perspective view schematically illustrating a part of a lid member and the housing;
Fig. 7 is a perspective view with a fixing member added to Fig. 6;
Fig. 8 is a cross-sectional view illustrating elements around the casing in a cross-sectional view taken along line VIII-VIII in Fig. 2;
Fig. 9 is a cross-sectional view illustrating the configuration in Fig. 8 but with the lid member pulled out; and
Fig. 10 is a cross-sectional view illustrating the configuration in Fig. 9 but with the lid member warped.

### DETAILED DESCRIPTION

An embodiment of the present invention will now be explained with reference to some drawings. The following embodiment is, however, not intended to limit the scope of the present invention in any way. In the drawings, substantially the same members are denoted by the same reference numerals.

In the following description, terms suggesting directions such as "upper", "lower", and "height" are used assumed in the orientation during the ordinary use, for the convenience of description, but these terms are not intended to limit the conditions or the like of the use of the electronic device according to the present invention.

### (Embodiment)

A configuration of an electronic device according to an embodiment of the present disclosure will be explained. Examples of the electronic device according to the embodiment of the present disclosure include a gaming device, a smartphone, and a personal computer. In the following description, a configuration of a gaming device will be explained, as an example of the electronic device.

In this embodiment, the electronic device is a portable device that is used in a manner placed on a setting surface such as a floor surface or a tabletop, or in a manner being held in the hands of a user. The electronic device may be capable of executing game processing. The game processing is not limited to being executed on the electronic device itself, but may also be executed on a console or a cloud that is separate from the electronic device. In such a case, an image or a video that is a result of processing executed on the separate console or cloud, for example, is displayed on a display unit of the electronic device.

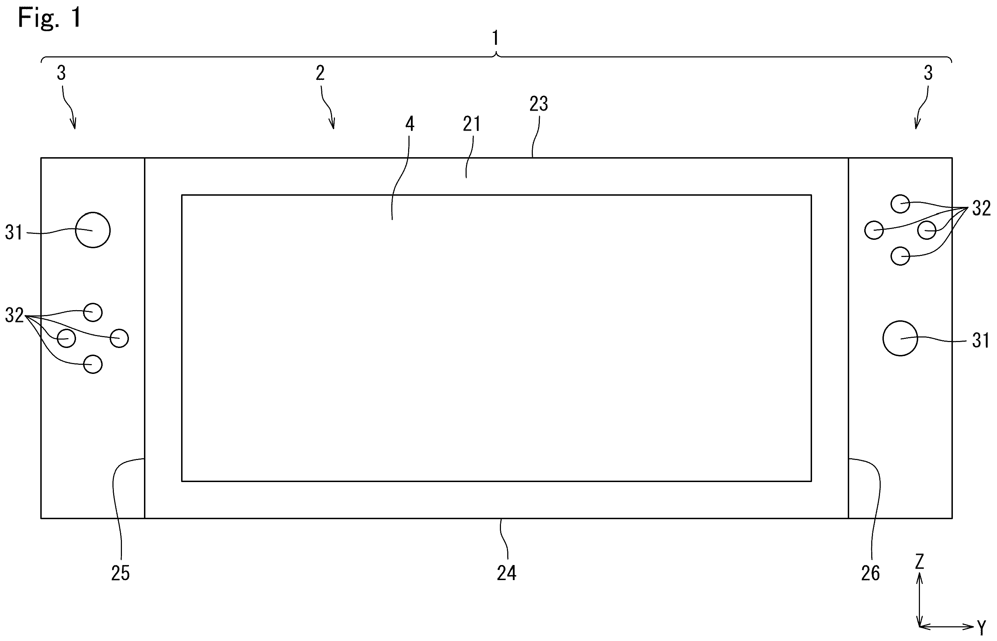

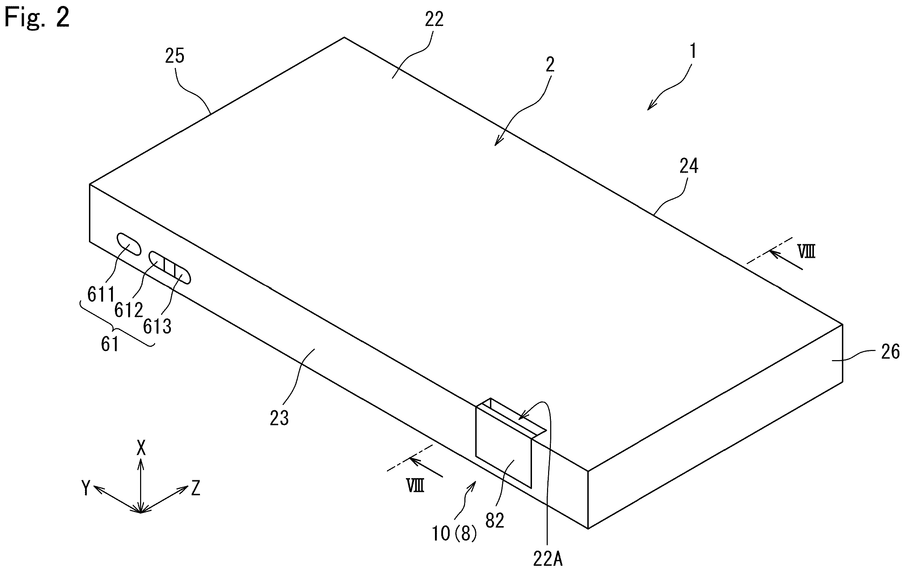

Fig. 1 is a front view schematically illustrating the electronic device according to the embodiment of the present disclosure. Fig. 2 is a perspective view schematically illustrating the electronic device according to the embodiment of the present disclosure.

In the description herein and in the drawings, for the convenience of the description, the depth direction of the electronic device 1 will be referred to as an X direction; the width direction of the electronic device 1 will be referred to as a Y direction; and the height direction of the electronic device 1 will be referred to as a Z direction. The X direction, the Y direction, and the Z direction intersect one another (orthogonal to one another, in this embodiment).

As illustrated in Figs. 1 and 2, the electronic device 1 includes a housing 2 and two controllers 3 that are removable from the housing 2. In Fig. 2, the two controllers 3 are removed from the housing 2. As means for attaching and removing the two controllers 3 to and from the housing 2, any known means such as fitting, sliding, and magnets may be used. The number of controllers 3 included in the electronic device 1 is not limited to two. The electronic device 1 does not need to include the controller 3.

The two controllers 3 are used to operate the electronic device 1. The two controllers 3 may be connected to the housing 2 (specifically, to a board 5, to be described later, provided internal of the housing 2) over the wire, or may be capable of remotely operating the electronic device 1 over a network such as the Internet. In such a configuration, a plurality of users at different locations may play a game being executed on the electronic device 1.

Each of the two controllers 3 includes, for example, a stick and an operation button for making an operation. In this embodiment, each of the two controllers 3 includes sticks 31 and operation buttons 32.

As illustrated in Fig. 2, the housing 2 has a substantially rectangular parallelepiped shape. The housing 2 has an internal space. As will be described later, various members are placed inside the internal space. The shape of the housing 2 is not limited to a substantially rectangular parallelepiped shape.

The housing 2 has a first wall 21, a second wall 22, and four side walls (a third wall 23, a fourth wall 24, a fifth wall 25, and a sixth wall 26) extending from the first wall 21 toward the second wall 22, in the X direction. The space surrounded by the first wall 21, the second wall 22, the third wall 23, the fourth wall 24, the fifth wall 25, and the sixth wall 26 forms the internal space of the housing 2.

The first wall 21 and the second wall 22 face each other in the X direction. The third wall 23 and the fourth wall 24 face each other in the Z direction. The fifth wall 25 and the sixth wall 26 face each other in the Y direction.

The housing 2 may be formed as one member by integrated molding, or may be formed as an assembly of a plurality of members.

In this embodiment, the housing 2 includes a first housing (lower housing) and a second housing (upper housing). The first housing includes the second wall 22 and the four side walls (the third wall 23, the fourth wall 24, the fifth wall 25, and the sixth wall 26). The second housing includes the first wall 21. In this embodiment, the first housing is made of an insulating material (e.g., resin), and the second housing is made of a conductive material (e.g., metal such as magnesium). In each of the schematic drawings, the first housing and the second housing are illustrated as one unit.

As illustrated in Fig. 1, the electronic device 1 includes a display unit 4 for displaying an image, a video, or the like. The display unit 4 is provided on the first wall 21 of the housing 2. The electronic device 1 maybe capable of displaying the image, the video, or the like on an external display such as a television.

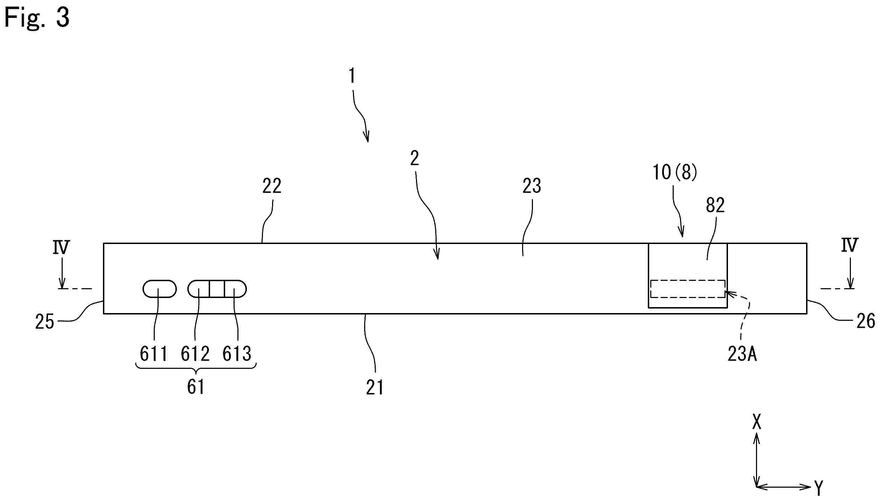

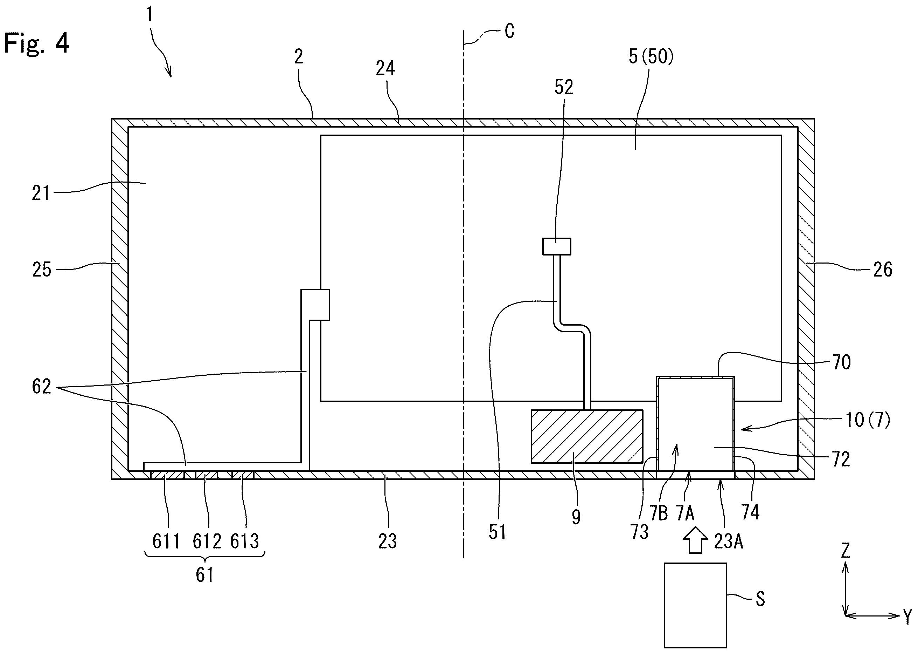

Fig. 3 is a plan view schematically illustrating the electronic device according to the embodiment of the present disclosure. Fig. 4 is a cross-sectional view taken along line IV-IV in Fig. 3.

As illustrated in Figs. 3 and 4, the third wall 23 of the housing 2 extends in the X direction that is a short-hand direction and the Y direction that is a longitudinal direction. The third wall 23 has a plurality of openings. For example, the plurality of openings includes openings for allowing an operation button 61 to be accessed from the external, and a window 23A for inserting the storage medium S into a casing 7 of a medium casing device 10, which will be described later. The plurality of openings connects the internal of the housing 2 to the external. Each of the plurality of openings is not necessarily need to be provided to the third wall 23, and may be provided to another wall (the first wall 21, the second wall 22, the fourth wall 24, the fifth wall 25, or the sixth wall 26).

As illustrated in Fig. 4, an operation button 61, a flexible printed board 62, a board 5, a medium casing device 10, and an antenna component 9 are disposed in the internal space of the housing 2.

The operation button 61 is a button pressed by a user to make operations of the electronic device 1. In this embodiment, the operation button 61 includes a power button 611 for powering ON or OFF the electronic device 1, and volume buttons 612, 613 for adjusting the output volume of an audio output unit (not illustrated) such as a speaker or an earphone.

The electronic device 1 is activated in response to pressing of the power button 611 while the electronic device 1 is powered OFF. The electronic device 1 is shut down in response to pressing of the power button 611 while the electronic device 1 is powered ON.

In response to pressing of the volume button 612, the output volume of the audio output unit (not illustrated) is decreased. In response to pressing of the volume button 613, the output volume of the audio output unit is increased.

As illustrated in Fig. 4, the operation button 61 is electrically connected to the board 5 via the flexible printed board 62.

The board 5 includes a substrate 50 that is insulating, and a conductive pattern (not illustrated).

The substrate 50 is made of ceramic or glass epoxy, for example. Various electronic components such as a system-on-chip (SoC) and a memory are mounted on the surface of the substrate 50. In Fig. 4, an antenna connector 52 is illustrated as the electronic component. Other electronic components are not illustrated. The electronic device 1 is controlled by these various electronic components. For example, the SoC is electrically connected to the display unit 4 described above. With this, the SoC controls to display an image, a video, or the like on the display unit 4.

The pattern is made of a conductive material such as copper. The pattern is provided on a surface of the substrate 50 or an internal surface of the substrate 50. The internal surface of the substrate 50 is a surface between two adjacent layers of the substrate 50, in a configuration in which the substrate includes a plurality of layers.

The pattern includes a signal pattern, a power supply pattern, and a ground pattern. The signal pattern, the power supply pattern, and the ground pattern are not in contact with one another. The signal pattern is electrically connected to each of the electronic components mounted on the substrate 50, and electrically connects the plurality of electronic components to one another. The power supply pattern is electrically connected to each of the electronic components mounted on the substrate 50, and feeds the power to each of the electronic components.

The potential of the ground pattern is set to a reference potential (ground potential) of the electronic device 1. The ground pattern is electrically connected to each of the electronic components mounted on the substrate 50. The ground pattern occupies a major part of the surface of the substrate 50 or the area of the internal layers of the substrate 50. For example, the ground pattern may be provided in a manner filling the area of the substrate 50, other than the areas where the signal pattern and the power supply pattern are provided. For example, the ground pattern may be provided on the entire surfaces of one of the surfaces of the substrate 50 and the internal surfaces of the substrate 50.

The medium casing device 10 includes a casing 7 illustrated in Fig. 4, and a lid member 8 illustrated in Fig. 3.

The casing 7 illustrated in Fig. 4 includes an insertion opening 7A through which the storage medium S is inserted, and an internal space 7B continuous with the insertion opening 7A and capable of housing the storage medium S. The casing 7 is provided internal of the housing 2 in such a manner that the insertion opening 7A is exposed to the external of the housing 2, via a window 23A provided to the third wall 23 of the housing 2. With this, the storage medium S can be inserted into the internal space 7B from the external of the housing 2 in the Z direction, through the window 23A and the insertion opening 7A. Also through the insertion opening 7A and the window 23A, the storage medium S housed in the internal space 7B of the casing 7 can be removed from the internal space 7B to the external of the housing 2 in the Z direction from the internal space 7B. The Z direction is an example of the insertion direction.

The storage medium S has a plurality of terminals to be connected to the electronic device 1. In this embodiment, the storage medium S is, for example, a game card storing therein a game program to be executed by the electronic device 1, but is not limited thereto. For example, the storage medium S may be a memory card such as an SD memory card capable of storing some data. Note that the storage medium S may store therein a program to be executed in another electronic device that is different from the electronic device 1 according to this embodiment.

The casing 7 is made of a conductive material such as steel use stainless (SUS). A part of the casing 7 may be made of a conductive material.

In this embodiment, the casing 7 is electrically connected to the board 5 that is a member having a surface area larger than that of the casing 7. The board 5 is an example of the conductor. The board 5 includes a conductive part. The conductive part of the board 5 may have a surface area larger than the surface area of the casing 7. In this embodiment, the board 5 includes a ground pattern having a surface area larger than the surface area of the casing 7. The casing 7 is electrically connected to the ground pattern. With this, the potential of the conductive casing 7 is brought to the reference potential (ground potential). In other words, the casing 7 is electrically connected to the ground potential of the electronic device 1. In the configuration in which a part of the casing 7 is conductive, the board 5, the conductive part of the board 5, or the ground pattern may have a surface area larger than the surface area of the conductive part of casing 7. The conductor to which the casing 7 is electrically connected may be any component other than the board 5, or may be a plurality of components including the board 5.

The member to which the casing 7 is electrically connected is not limited to the board 5. For example, the casing 7 may be electrically connected to the second housing (first wall 21) made of a conductive material, or to an internal frame (not illustrated) made of a conductive material such as metal, the internal frame being provided internal of the housing 2. In such a configuration, with the second housing or the internal frame being set to the reference potential (ground potential) of the electronic device 1, the casing 7 is electrically connected to the ground potential of the electronic device 1. In other words, in this configuration, the second housing or the internal frame is an example of the conductor.

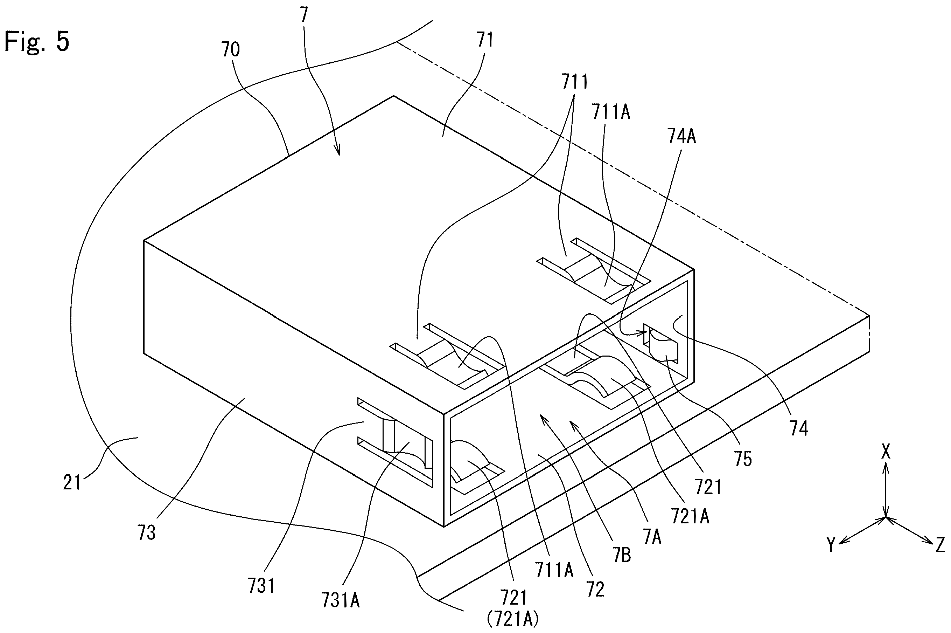

Fig. 5 is a perspective view schematically illustrating a part of the casing and the housing.

As illustrated in Figs. 4 and 5, the casing 7 includes a rear wall 70, a first partition wall 71, a second partition wall 72, a third partition wall 73, and a fourth partition wall 74. The rear wall 70, the first partition wall 71, the second partition wall 72, the third partition wall 73, and the fourth partition wall 74 define the internal space 7B in which the storage medium S is housed.

The rear wall 70 spreads in the X direction and the Y direction. The rear wall 70 faces the window 23A of the third wall 23 in the Z direction. The casing 7 is provided with a plurality of terminals (not illustrated). The plurality of terminals of the storage medium S housed inside the casing 7 are respectively connected to the plurality of terminals provided to the casing 7. The potentials of the plurality of terminals provided to the casing 7 change depending on whether the storage medium S is connected thereto. The plurality of terminals provided to the casing 7 are electrically connected to the SoC via the signal pattern and the power supply pattern that are provided on the substrate 50 of the board 5, described above. For example, the SoC detects whether the storage medium S is electrically connected to the terminals provided to the casing on the basis of the potentials of the plurality of terminals provided to the casing 7.

The first partition wall 71, the second partition wall 72, the third partition wall 73, and the fourth partition wall 74 extend in the Z direction, from the rear wall 70 toward the third wall 23. One end of each of the first partition wall 71, the second partition wall 72, the third partition wall 73, and the fourth partition wall 74 in the Z direction is connected to the rear wall 70. The space surrounded by the other ends of the first partition wall 71, the second partition wall 72, the third partition wall 73, and the fourth partition wall 74 in the Z direction delineates the insertion opening 7A.

The first partition wall 71 and the second partition wall 72 face each other in the X direction, with the insertion opening 7A interposed therebetween. The third partition wall 73 and the fourth partition wall 74 face each other in the Y direction, with the insertion opening 7A interposed therebetween. The X direction is one example of the first direction. The Y direction is one example of the second direction. The first partition wall 71 and the second partition wall 72 are positioned between the third partition wall 73 and the fourth partition wall 74 in the Y direction. The third partition wall 73 and the fourth partition wall 74 are positioned between the first partition wall 71 and the second partition wall 72 in the X direction.

As illustrated in Fig. 5, the first partition wall 71 has two leaf springs 711; the second partition wall 72 has two leaf springs 721; and the third partition wall 73 has one leaf spring 731. The numbers of the leaf springs 711, 721, and 731 are not limited to these numbers (that is, the numbers illustrated in Fig. 5).

Each of the leaf springs 711, 721, and 731 is bendable between the internal and the external of the casing 7. Specifically, the leaf springs 711 and 721 are bendable in the X directions, and the leaf spring 731 is bendable in the Y directions.

The leaf spring 711 has a curved portion 711A bulging into the internal space 7B. In the same manner, the leaf spring 721 has a curved portion 721A bulging into the internal space 7B, and the leaf spring 731 has a curved portion 731A bulging into the internal space 7B.

The fourth partition wall 74 has a through hole 74A penetrating the fourth partition wall 74 in the Y direction. The detection unit 75 is provided in a manner passing through the through hole 74A. The detection unit 75 is for detecting whether the lid member 8 illustrated in Fig. 3 is attached to the casing 7. The detection unit 75 protrudes into the internal space 7B through the through hole 74A, from the external of the casing 7. The detection unit 75 is biased into the internal space 7B by a biasing member (e.g., a spring), not illustrated, provided external of the casing 7. The detection unit 75 is separated from the casing 7, and is not electrically connected to the casing 7. The detection unit 75 is electrically connected to the SoC mounted on the board 5. The electronic device 1 detects that a lid 81 is attached to the casing 7 by causing the SoC to recognize the potential of the detection unit 75, as will be described later.

As illustrated in Fig. 3, the lid member 8 is provided at a position where the window 23A of the third wall 23 can be covered thereby. A part of the lid member 8 is exposed to the external of the housing 2, and the other part of the lid member 8 is positioned internal of the housing 2. The lid member 8 is supported by the housing 2.

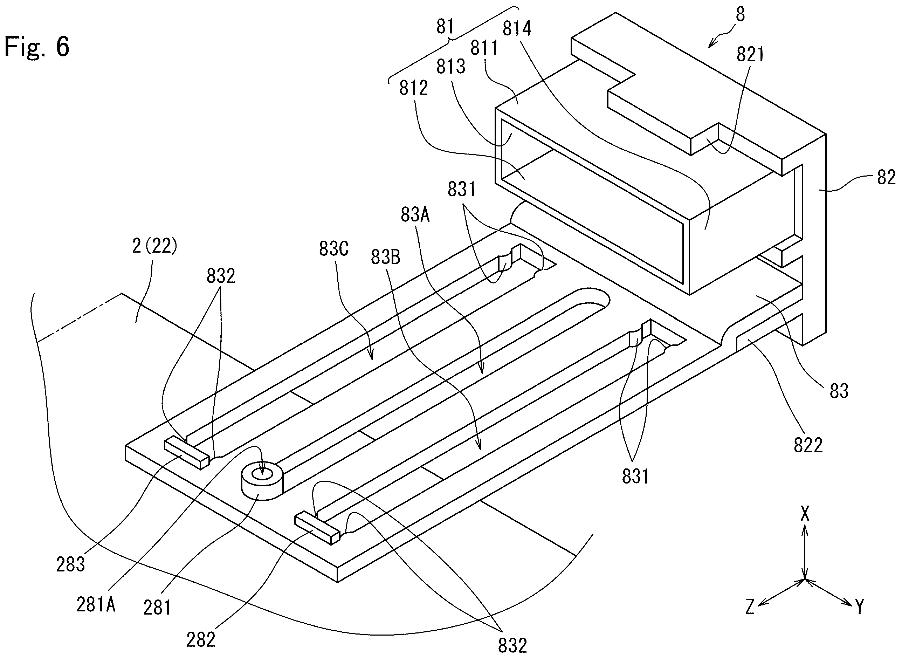

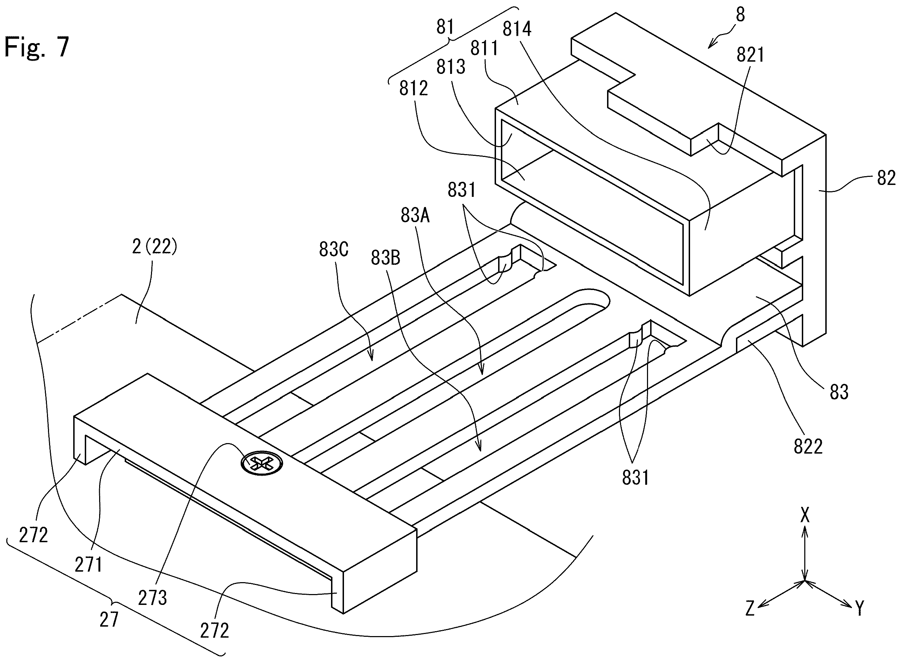

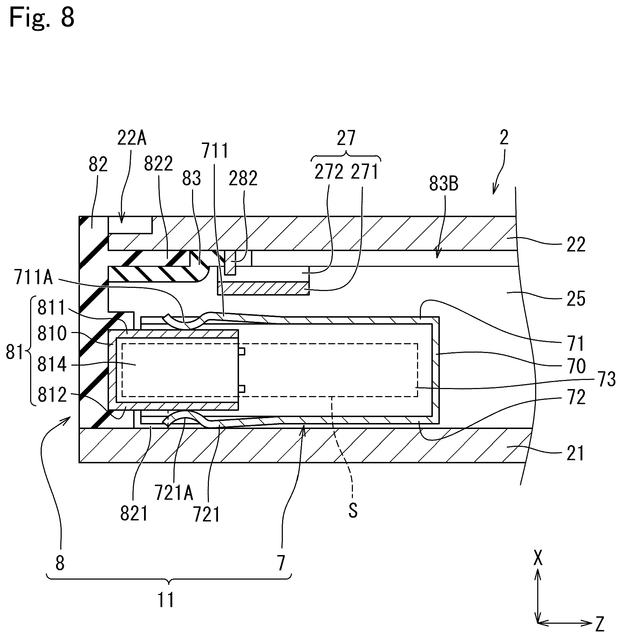

Fig. 6 is a perspective view schematically illustrating a part of the lid member and the housing. Fig. 7 is a perspective view with a fixing member added to Fig. 6. Fig. 8 is a cross-sectional view illustrating elements around the casing in a cross-sectional view taken along line VIII-VIII in Fig. 2.

As illustrated in Figs. 6 to 8, the lid member 8 includes a lid 81, a cover 82, and a slider 83.

As illustrated in Fig. 8, the lid 81 is positioned internal of the housing 2. The lid 81 faces the casing 7 in the Z direction. The lid 81 has an opening toward the casing 7. The lid 81 is made of a conductive material such as steel use stainless (SUS).

As illustrated in Figs. 6 to 8, the lid 81 includes a closing wall 810, a first side wall 811, a second side wall 812, a third side wall 813, and a fourth side wall 814.

The closing wall 810 spreads in the X direction and the Y direction. The closing wall 810 faces the insertion opening 7A and the rear wall 70 of the casing 7 in the Z direction.

The first side wall 811, the second side wall 812, the third side wall 813, and the fourth side wall 814 extend in the Z direction, from the closing wall 810 toward the rear wall 70. One end of each of the first side wall 811, the second side wall 812, the third side wall 813, and the fourth side wall 814 in the Z direction is connected to the closing wall 810.

The first side wall 811 and the second side wall 812 face each other in the X direction. The third side wall 813 and the fourth side wall 814 face each other in the Y direction. The first side wall 811 and the second side wall 812 are positioned between the third side wall 813 and the fourth side wall 814 in the Y direction. The third side wall 813 and the fourth side wall 814 are positioned between the first side wall 811 and the second side wall 812 in the X direction.

A part of the cover 82 is exposed to the external of the housing 2, and the part other than such a part is positioned internal of the housing 2. The cover 82 covers a part of the lid 81 from the opposite side of the casing 7 in the Z direction. The cover 82 is attached to the lid 81 using known means such as an adhesive. The cover 82 is made of an insulating material such as resin. In this embodiment, the cover 82 is made of polycarbonate-acrylonitrile-butadiene-styrene resin (PC/ABS).

As illustrated in Figs. 6 to 8, the cover 82 includes a first protrusion 821 and a second protrusion 822. The first protrusion 821 and the second protrusion 822 protrude toward the internal of the housing 2 in the Z direction. In this embodiment, the protruding length of the second protrusion 822 is longer than the protruding length of the first protrusion 821. The first protrusion 821 and the second protrusion 822 together nip the lid 81 in the X direction.

The slider 83 is positioned internal of the housing 2. The slider 83 extends from the cover 82 toward the internal of the housing 2 in the Z direction. The slider 83 is made of an insulating material having flexibility. In this embodiment, the slider 83 is made of elastomer. In this embodiment, the slider 83 is integrally formed with the cover 82 using two-shot molding. The slider 83 is formed in the first shot of the two-shot molding, and the cover 82 is formed in the second shot of the two-shot molding. The slider 83 is connected to the first protrusion 821 of the cover 82. The slider 83 and the cover 82 do not need to be integrally formed by two-shot molding. For example, the slider 83 and the cover 82 may be attached using an adhesive.

In this embodiment, the slider 83 is attached to the lid 81 via the cover 82. In other words, the slider 83 is attached indirectly to the lid 81. The slider 83 may be directly attached to the lid 81.

As illustrated in Fig. 6, the slider 83 has a central long hole 83A and a pair of side long holes 83B, 83C. The central long hole 83A extends in the Z direction. The central long hole 83A is disposed between the pair of side long holes 83B, 83C in the Y direction, and each of the pair of side long holes 83B, 83C extends in the Z direction. The central long hole 83A and the pair of side long holes 83B, 83C are arranged along the Y direction.

A central protrusion 281 protruding from the second wall 22 of the housing 2 is passed through the central long hole 83A. A side protrusion 282 protruding from the second wall 22 is passed through the side long hole 83B. A side protrusion 283 protruding from the second wall 22 is passed through the side long hole 83C. The central protrusion 281, the side protrusion 282, and the side protrusion 283 are arranged along the Y direction.

As illustrated in Fig. 7, a fixing member 27 is fixed to the central protrusion 281 by inserting a screw 273 into a hole 281A (see Fig. 6) provided to the central protrusion 281. By nipping the slider 83 between a pressing plate 271 provided to the fixing member 27 and the second wall 22, a positional displacement of the slider 83 in the X direction is restricted. By nipping the slider 83 between a pair of side plates 272 provided to the fixing member 27, a positional displacement of the slider 83 in the Y direction is restricted. The central protrusion 281 and the side protrusions 282, 283 come into contact with the peripheries of the central long hole 83A and the pair of side long holes 83B, 83C, respectively in the Z direction, so that the lid member 8 is prevented from falling off from the housing 2 in the Z direction.

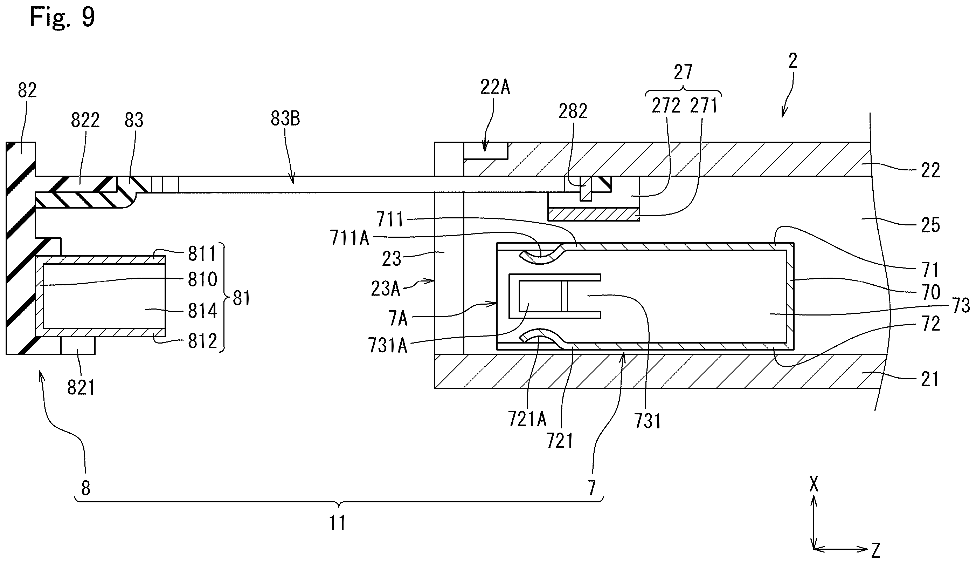

The slider 83 is supported slidably in the Z direction, by the housing 2 and the fixing member 27. The slider 83 is slidable to an intruded position illustrated in Fig. 8, and an extruded position illustrated in Fig. 9. Fig. 9 is a cross-sectional view illustrating the lid member pulled out from the position illustrated in Fig. 8.

As illustrated in Fig. 8, when the slider 83 is at the intruded position, the slider 83 is positioned internal of the housing 2. At this time, the central protrusion 281, the side protrusion 282, and the side protrusion 283 are at an end of the central long hole 83A, an end of the side long hole 83B, and an end of the side long hole 83C, respectively, the ends being ends on the side where the lid 81 is provided. The side long holes 83B, 83C are provided with hooks 831 (see Fig. 6), and these hooks 831 hold the pair of side protrusions 282, 283 at these ends.

As illustrated in Fig. 9, when the slider 83 is at the extruded position, at least a part of the slider 83 protrudes external of the housing 2. At this time, the central protrusion 281, the side protrusion 282, and the side protrusion 283 are at an end of the central long hole 83A, an end of the side long hole 83B, and an end of the side long hole 83C, respectively, the ends being those on the opposite side of where the lid 81 is provided. The side long holes 83B, 83C are provided with hooks 832 (see Fig. 6), and these hooks 832 hold the pair of side protrusions 282, 283 at these ends.

The pair of side protrusions 282, 283 being held between the hooks 831, 832 are released by causing the hooks 831, 832 to elastically deform by applying an external force to the hooks 831, 832. The external force is applied to the hooks 831, 832 when a user moves the slider 83 by holding the lid member 8.

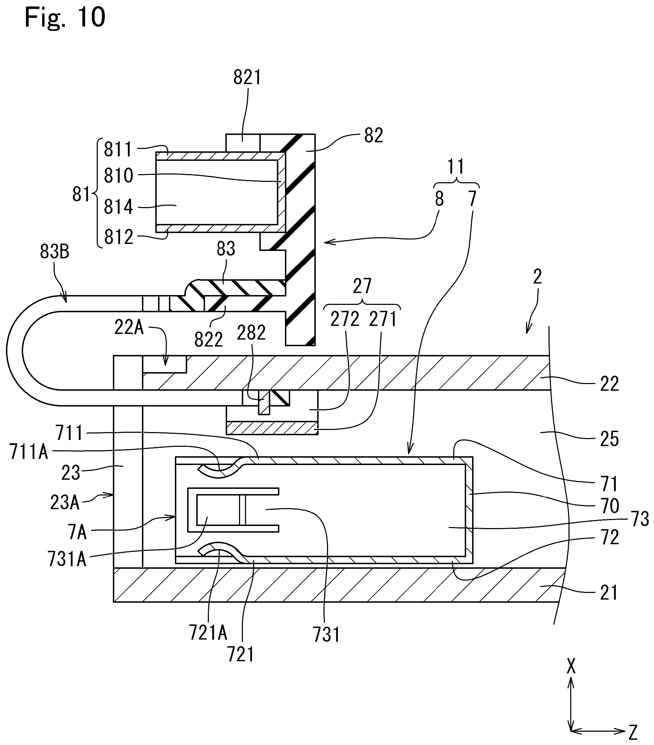

The lid 81 and the cover 82 slide as the slider 83 is caused to slide. In other words, the lid 81, the cover 82, and the slider 83 move as one unit. The lid 81 and the cover 82 are also moved to the positions illustrated in Fig. 10 by bending the slider 83 at the extruded position. Fig. 10 is a cross-sectional view illustrating the position of the lid member bent from the position illustrated in Fig. 9. In the manner described above, the lid member 8 can take a first form illustrated in Fig. 8, a second form illustrated in Fig. 9, and a third form illustrated in Fig. 10.

When the lid member 8 is in the first form, as illustrated in Fig. 8, the slider 83 is at the intruded position, as described above. At this time, the lid 81 is at the close position where the insertion opening 7A of the casing 7 is closed. When the lid member 8 is in the second form, as illustrated in Fig. 9, the slider 83 is at the extruded position, as described above. At this time, the lid 81 is at the open position where the insertion opening 7A of the casing 7 is open. In other words, the lid member 8 is movable between the close position and the open position. Note that the open position may be any position (e.g., a position illustrated in Figs. 9 and 10) at which the insertion opening 7A of the casing 7 opens, and is not limited to one fixed position.

When the lid 81 is at the close position, as illustrated in Fig. 8, the closing wall 810 of the lid 81 closes the insertion opening 7A.

When the lid 81 is at the close position, the first side wall 811, the second side wall 812, the third side wall 813, and the fourth side wall 814 of the lid 81 are in the internal space 7B of the casing 7.

At this time, at least a part of the first side wall 811 and a part of the first partition wall 71 overlap each other in a view in the X direction. In this embodiment, a part of the first side wall 811 (specifically, a far part of the first side wall 811, the far part being far with respect to the closing wall 810) and a part of the first partition wall 71 (specifically, a near part of the first partition wall 71, the near part being near with respect to the insertion opening 7A) overlap each other.

In the same manner, when the lid 81 is at the close position, at least a part of the second side wall 812 and a part of the second partition wall 72 overlap each other in a view in the X direction. In the same manner, when the lid 81 is at the close position, at least a part of the third side wall 813 and a part of the third partition wall 73 overlap each other, and at least a part of the fourth side wall 814 and a part of the fourth partition wall 74 overlap each other in a view in the Y direction.

As a result, the storage medium S housed in the casing 7 is surrounded by the casing 7 and the lid 81. In Fig. 8, the storage medium S is indicated by a broken line.

When the lid 81 is at the close position, the lid 81 and the casing 7 are engaged to each other. The leaf spring 711 of the first partition wall 71 is engaged to the first side wall 811. In the same manner, the leaf spring 721 of the second partition wall 72 is engaged to the second side wall 812, and the leaf spring 731 of the third partition wall 73 is engaged to the third side wall 813. When the lid 81 is at the close position, the detection unit 75 is engaged to the fourth side wall 814. The leaf spring 711 is an example of a first engaging portion. The leaf spring 721 is an example of a second engaging portion. The leaf spring 731 is an example of a third engaging portion. With the lid 81 and the casing 7 being engaged to each other, the lid 81 is held by the casing 7 at the close position.

In this embodiment, as will be described in detail below, the first side wall 811, the second side wall 812, and the third side wall 813 are engaged by pressing the leaf springs 711, 721, and 731. In the course of moving the lid 81 from the open position to the close position, the first side wall 811 presses the leaf spring 711 of the first partition wall 71, and causes the leaf spring 711 to bend toward the external of the casing 7. In the same manner, the second side wall 812 presses the leaf spring 721 of the second partition wall 72, and causes the leaf spring 721 to bend toward the external of the casing 7, and the third side wall 813 presses the leaf spring 731 of the third partition wall 73, and causes the leaf spring 731 to bend toward the external of the casing 7.

With this configuration, when the lid 81 is at the close position, the leaf spring 711 is in contact with the first side wall 811, which is the engaging counterpart, while pressing the first side wall 811 with the elastic restoring force. While the lid 81 is at the close position, the leaf spring 721 is kept in contact with the second side wall 812, which is the engaging counterpart, while pressing the second side wall 812 with the elastic restoring force. While the lid 81 is at the close position, the leaf spring 731 is kept in contact with the third side wall 813, which is the engaging counterpart, while pressing the third side wall 813 with the elastic restoring force.

In this embodiment, as will be described in detail below, the fourth side wall 814 presses the detection unit 75, and thus becomes engaged with the detection unit 75. In the process in which the lid 81 moves from the open position to the close position, the fourth side wall 814 presses the detection unit 75, and causes the detection unit 75 to move toward the external of the casing 7, against the biasing force of the biasing member. As a result, when the lid 81 is at the close position, the detection unit 75 is in contact with the fourth side wall 814, which is the engaging counterpart, while pressing the fourth side wall 814 with the elastic restoring force of the biasing member.

When the lid 81 is at the close position, the lid 81 and the casing 7 that are engaged to each other are electrically connected. As a result, the potential of the lid 81 is brought to the same potential as the casing 7, and the potential of the lid 81 is brought to the reference potential (ground potential). Furthermore, when the lid 81 is at the close position, the lid 81 and the detection unit 75 that are engaged to each other are electrically connected. As a result, the potential of the detection unit 75 is brought to the same potential as the lid 81, and the potential of the detection unit 75 is brought to the reference potential. The SoC detects that the lid 81 is at the close position by recognizing that the potential of the detection unit 75 is at the reference potential.

When the lid 81 is at the close position, the first protrusion 821 is protruding toward internal of the housing 2, and is positioned between the casing 7 and the first wall 21. The second protrusion 822 is protruding toward the internal of the housing 2, and is positioned between the casing 7 and the second wall 22. In this embodiment, when the lid 81 is at the close position, the first protrusion 821 is in contact with the first wall 21, and the second protrusion 822 is in contact with the second wall 22, but the first protrusion 821 and the second protrusion 822 do not need to be in contact with the first wall 21 and the second wall 22, respectively.

When the lid 81 is at the close position, the cover 82 is exposed to the external of the housing 2, but the lid 81 is covered by the cover 82 and therefore is not exposed to the external of the housing 2. In other words, when the lid 81 is at the close position, the cover 82 covers a part of the lid 81 so that the lid 81 is not exposed to the external.

When the lid member 8 is in the first form, there is a gap 22A between the cover 82 and the second wall 22. As the user puts a finger or the like into the gap 22A and pulls the lid member 8 backward, the lid member 8 is caused to slide in the Z direction. At this time, as the lid member 8 is pulled backward with a force larger than the elastic restoring force of the leaf springs 711, 721, and 731 and the biasing member, the engagement between the lid 81 and the casing 7 is released. At this time, by pulling the lid member 8 backward with a force enough to cause the hooks 831, 832 to elastically deform, the pair of side protrusions 282, 283 having been held between the hooks 831, 832 are released. When the lid member 8 is pulled backward, the slider 83 moves from the intruded position to the extruded position, and the lid 81 moves from the close position to the open position. As a result, the lid member 8 shifts from the first form illustrated in Fig. 8 to the second form illustrated in Fig. 9.

As illustrated in Fig. 9, when the lid 81 is at the open position, the insertion opening 7A is opened, with the lid 81 spaced apart from the casing 7. As a result, the storage medium S can be inserted into the casing 7 or the storage medium S housed inside the casing 7 can be removed, through the insertion opening 7A.

When the lid 81 is at the open position, the lid 81 is separated from the detection unit 75. As a result, the detection unit 75 and the lid 81 are electrically disconnected, and the detection unit 75 comes to have a potential different from that of the lid 81. As described above, the detection unit 75 is separated from the casing 7, and is not electrically connected to the casing 7. Therefore, when the lid 81 is at the open position, the potential of the detection unit 75 is not at the reference potential (ground potential). The SoC detects that the lid 81 is at the open position by recognizing that the potential of the detection unit 75 is not at the reference potential. In this embodiment, when the lid 81 is at the open position, the lid 81 is separated from the casing 7. As a result, the lid 81 and the casing 7 are electrically disconnected, and the lid 81 ceases to have the reference potential. Note that, even when the lid 81 is at the open position, the lid 81 may remain electrically connected to the casing 7 without being separated from the casing 7.

As mentioned earlier, the SoC detects that the lid 81 is at the close position by recognizing that the potential of the detection unit 75 is at the reference potential. The SoC also detects whether the storage medium S is housed inside the casing 7 on the basis of the potential of the connector provided on the rear wall 70 of the casing 7.

If the SoC detects that the lid 81 is at the open position (in other words, the lid 81 is not at the close position) while detecting the presence of the storage medium S in the casing 7, the SoC issues an alert command to the display unit 4. The alert command is, for example, a command for displaying a message "Please move the lid 81 from the open position to the close position". In response to the alert command from the SoC, the display unit 4 displays the message. The SoC may issue an alert command to the display unit 4 in a case other than the case described above. For example, if the SoC detects that the lid 81 is at the open position while detecting the absence of the storage medium S in the casing 7, the SoC may issue the same alert command as that described above to the display unit 4. The display unit 4 only needs to make an alert of the position of the lid 81 on the basis of a condition of a storage medium S housed inside the casing 7. The display unit 4 is an example of an alert unit.

Note that the alert described above is not limited to a message being displayed by the display unit 4. For example, the alert described above may be provided by a voice message, a beeping sound, vibration, or the like from the audio output unit (not illustrated) included in the electronic device 1. In such a case, the audio output unit corresponds to the alert unit.

When the lid member 8 is in the second form, the slider 83 is at the extruded position. A user can then hold and bend a part of the slider 83 protruding external of the housing 2. When the part is bent, the lid member 8 shifts from the second form illustrated in Fig. 9 to the third form illustrated in Fig. 10.

As illustrated in Fig. 10, when the lid member 8 is in the third form, the window 23A and the insertion opening 7A are not blocked by the lid member 8, in a view of the third wall 23 from the front side in the Z direction. Therefore, when the lid member 8 is in the third form, the storage medium S can be inserted into or removed from the casing 7 more smoothly, than when the lid member 8 is in the second form.

As illustrated in Fig. 4, the antenna component 9 is provided internal of the housing 2, near the third wall 23. The third wall 23 is an example of an outer wall. The antenna component 9 is provided adjacently to the casing 7. The antenna component 9 and the casing 7 are positioned on the same side with respect to the center C of the third wall 23 in the Y direction.

The antenna component 9 is a member that transmits and receives radio waves, and a known component is used as the antenna component 9. For example, the antenna component 9 is used in communication such as that over Bluetooth (registered trademark) or a wireless LAN. The antenna component 9 is electrically connected to the antenna connector 52 via wiring 51, for example. The antenna connector 52 and the SoC are electrically connected via a pattern provided on the substrate 50, for example. With this, the electronic device 1 can establish communication with the external.

In the embodiment described above, the engaging portions (the first engaging portion, the second engaging portion, and the third engaging portion) are provided as the leaf springs 711, 721, 731. However, the engaging portions are not limited to leaf springs. For example, the engaging portions may be a recess that is provided to the casing 7 and a protrusion that is provided to the lid 81 and that is fitted into the recess.

In the embodiment described above, the detection unit 75 is provided to the fourth partition wall 74. However, the detection unit 75 may be provided to somewhere other than the fourth partition wall 74. For example, the detection unit 75 may be provided to the first partition wall 71. The fourth partition wall 74 may also have a engaging portion such as a leaf spring, in the same manner as the first partition wall 71, the second partition wall 72, and the third partition wall 73.

In the embodiment described above, the engaging portions (the first engaging portion, the second engaging portion, and the third engaging portion) such as the leaf springs 711, 721, and 731 are provided to the casing 7. However, the engaging portions may be provided to the lid 81. For example, the leaf spring 711 may be provided to the first side wall 811. In the same manner, the leaf spring 721 may be provided to the second side wall 812, and the leaf spring 731 may be provided to the third side wall 813.

The engaging portions (the first engaging portion, the second engaging portion, and the third engaging portion) may be provided to both of the casing 7 and the lid 81.

Some of the engaging portions (the first engaging portion, the second engaging portion, and the third engaging portion) may be provided to the casing 7, and the other engaging portions may be provided to the lid 81. For example, the leaf spring 711 may be provided to the first partition wall 71 of the casing 7, and the leaf spring 721 may be provided to the second side wall 812 of the lid 81.

In the embodiment described above, the engaging portions (the leaf springs 711, 721, 731) are provided to the three partition walls (the first partition wall 71, the second partition wall 72, and the third partition wall 73), respectively. However, the engaging portions may be provided to only some of the three partition walls. For example, the first partition wall 71 and the second partition wall 72 may have leaf springs 711 and 721, respectively, and the third partition wall 73 does not need to have the leaf spring 731. A engaging portion may be provided to each of the four partition walls (the first partition wall 71, the second partition wall 72, the third partition wall 73, and the fourth partition wall 74).

The casing 7 may be provided with only some of the rear wall 70, the first partition wall 71, the second partition wall 72, the third partition wall 73, and the fourth partition wall 74. For example, the casing 7 does not need to have the third partition wall 73 and the fourth partition wall 74.

The lid 81 may be provided with only some of the first side wall 811, the second side wall 812, the third side wall 813, and the fourth side wall 814. For example, the lid 81 may be provided only with the third side wall 813 and the fourth side wall 814. The lid 81 does not need to have the first side wall 811, the second side wall 812, the third side wall 813, and the fourth side wall 814. In such a case, when the lid 81 is at the close position, the closing wall 810 is engaged to the casing 7.

In the embodiment described above, the slider 83 is made of an insulating material, but at least a part of the slider 83 may be made of a conductive material. For example, the slider 83 provided as one member may contain a conductive material, or a part of the slider 83 including a plurality of members may be made of a conductive material.

The slider 83 may be electrically connected to the lid 81. With this, the slider 83 can be brought to the reference potential, in the same manner as the lid 81, and can serve as an electromagnetic shield for the storage medium S housed inside the casing 7.

The slider 83 may be electrically connected to at least one of the board 5 (specifically, to the ground pattern provided on the board 5) and the casing 7. With this, too, the slider 83 can be brought to the reference potential, in the same manner as the lid 81, and can serve as an electromagnetic shield for the storage medium S housed inside the casing 7.

In the embodiment described above, the cover 82 is made of an insulating material. However, at least a part of the cover 82 may be made of a conductive material, and the cover 82 may be electrically connected to at least one of the lid 81, the board 5, and the casing 7, in the same manner as the slider 83.

Note that, by combining any of the embodiment and modifications described above as appropriate, it is possible to achieve the advantageous effects that are provided by the respective embodiment and modifications thus combined.

### REFERENCE SIGNS LIST

- 1: Electronic device
- 2: Housing
- 21: First wall
- 22: Second wall
- 23: Third wall
- 23A: Window
- 4: Display unit
- 5: Board
- 7: Casing
- 7A: Insertion opening
- 71: First partition wall
- 711: Leaf spring
- 72: Second partition wall
- 721: Leaf spring
- 73: Third partition wall
- 731: Leaf spring
- 74: Fourth partition
- 75: Detection unit
- 81: Lid
- 810: Closing wall
- 811: First side wall
- 812: Second side wall
- 813: Third side wall
- 814: Fourth side wall
- 82: Cover
- 821: First protrusion
- 822: Second protrusion
- 83: Slider
- 9: Antenna component
- 10: Medium casing device

## Claims

1. An electronic device comprising:
a casing (7) configured to carry a storage medium (S) therein, the casing (7) having an insertion opening (7A) for inserting the storage medium (S), at least a part of the casing (7) being conductive; and
a lid (81) configured to take an open position with the insertion opening (7A) opened and a close position with the insertion opening (7A) closed, at least a part of the lid being conductive, wherein
the casing (7) is electrically connected to a conductor (5) having a surface area larger than that of the casing (7), and
the lid (81) is electrically connected to the casing (7) when the lid is in the close position.

2. The electronic device according to claim 1, wherein
the lid (81) is electrically disconnected from the casing (7) when the lid (81) is in the open position, and further comprising:
a detection unit (75) detecting whether the lid (81) is in the open position or in the close position based on the electrical connection/disconnection between the lid (81) and the casing (7).

3. The electronic device according to claim 1 or 2, further comprising:
an insulating cover (82) placed over at least a part of the lid to prevent the lid (81) from being exposed to external when the lid (81) is in the close position.

4. The electronic device according to claim 3, further comprising:
a housing (2) having the casing (7) installed inside, comprising a first wall (21) and a second wall (22) facing each other, wherein
the cover (82) comprises
a first protrusion (821) protruding in to the housing (2), and being positioned between the casing (7) and the first wall (21), when the lid (81) is in the close position, and
a second protrusion (822) protruding in to the housing (2), and being positioned between the casing (7) and the second wall (22), when the lid (81) is in the close position.

5. The electronic device according to any one of claims 1 to 4, further comprising:
an antenna component (9) provided adjacently to the casing (7).

6. The electronic device according to any one of claims 1 to 5, further comprising:
a housing (2) having an outer wall (21, 22, 23) with a longitudinal direction and a short-hand direction, and comprising a window (23A) defined in the outer wall (21, 22, 23); and
an antenna component (9) inside the housing (2) close to the outer wall (23), wherein
the casing (7) is located inside the housing (2), with the insertion opening (7A) exposed to external of the housing (2) through the window (23A), and
the casing (7) and the antenna component (9) are on the same half side with respect to a center (C) of the outer wall (23) along the longitudinal direction.

7. The electronic device according to any one of claims 1 to 6, further comprising:
an alert unit (4) alerting that the storage medium (S) is inserted inside the casing (7) and that the lid (81) is not in the close position.

8. The electronic device according to any one of claims 1 to 7 further comprising:
a housing (2) installing the casing (7) therein; and
a slider (83) configured to slide between an intruded position with the slider (83) intruded into the housing (2), and an extruded position with at least a part of the slider (83) extruded from the housing (2), wherein
the lid (81) is attached to the slider (83) directly or indirectly,
the lid (81) is in the close position when the slider (83) is in the intruded position, and
the lid (81) is in the open position when the slider (83) is in the extruded position.

9. The electronic device according to any one of claims 1 to 8, wherein
the lid (81) comprises
a closing wall (810) configured to close the insertion opening (7A) when the lid (81) is in the close position, and
a first side wall (811) and a second side wall (812) both extending, in an insertion direction defined as a direction for inserting the storage medium (S), from the closing wall (810) such that the first side wall (811) and a second side wall (812) face each other in a first direction orthogonal to the insertion direction, and
the casing (7) comprises
a first partition wall (71) and a second partition wall (72) facing each other in the first direction with the insertion opening (7A) provided between the first partition wall (71) and the second partition wall (72), each of the first partition wall (71) and the second partition wall (72) extending in the insertion direction, and the first partition wall (71) and the second partition wall (72) define a space for carrying the storage medium (S), and wherein
when the lid (81) is in the close position, at least a part of the first side wall (811) and at least a part of the first partition wall (71) overlap each other in the first direction, and, at least a part of the second side wall (812) and at least a part of the second partition wall (72) overlap each other in the first direction.

10. The electronic device according to claim 9, wherein
one of the first side wall (811) and the first partition wall (71) comprises a first engaging portion (711) engaging to the other one of the first side wall (811) and the first partition wall (71), and
one of the second side wall (812) and the second partition wall (72) comprises a second engaging portion (721) engaging to the other one of the second side wall (812) and the second partition wall (72).

11. The electronic device according to claim 10, wherein
at least one of the first engaging portion (711) and the second engaging portion (721) is a leaf spring, and
when the lid (81) is in the close position, the leaf spring comes into contact with a counterpart engaging portion, so as to press the counterpart engaging portion by an elastic restoring force of the leaf spring.

12. The electronic device according to any one of claims 9 to 11, wherein
the lid (81) further comprises
a third side wall (813) and a fourth side wall (814) extending from the closing wall (810) in the insertion direction, the third side wall (813) and the fourth side wall (814) facing each other in a second direction orthogonal to the insertion direction and intersecting with the first direction,
the casing (7) further comprises
a third partition wall (73) and a fourth partition wall (74) facing each other in the second direction with the insertion opening (7A) provided between the third partition wall (73) and the fourth partition wall (74), each of the third partition wall (73) and the fourth partition wall (74) extending in the insertion direction, and the third partition wall (73) and the fourth partition wall (74) define a space for carrying the storage medium (S), and wherein
when the lid (81) is in the close position, at least a part of the third side wall (813) and at least a part of the third partition wall (73) overlap each other in the second direction, and, at least a part of the fourth side wall (814) and at least a part of the fourth partition wall (74) overlap each other in the second direction.

13. The electronic device according to claim 12, wherein
one of the third side wall (813) and the third partition wall (73) comprises
a third engaging portion (731) engaging to the other one of the third side wall (813) and the third partition wall (73).

14. The electronic device according to claim 13, wherein
the third engaging portion (713) is a leaf spring, and
when the lid (81) is in the close position, the leaf spring comes into contact with a counterpart engaging portion, so as to press the counterpart engaging portion by an elastic restoring force of the leaf spring.

15. The electronic device according to any one of claims 1 to 14, wherein
the casing (7) is electrically connected to the conductor (5) at a ground potential.

16. The electronic device according to any one of claims 1 to 15, wherein
the casing (7) is electrically connected to a ground pattern, and the ground pattern has a larger surface area than a surface area of the conductive part of the casing.

17. An electronic device comprising:
a casing (7) configured to carry a storage medium (S) therein, the casing (7) having an insertion opening (7A) for inserting the storage medium, at least a part of the casing (7) being conductive; and
a lid (81) configured to take an open position with the insertion opening (7A) opened and a close position with the insertion opening (7A) closed, at least a part of the lid being conductive, wherein
the casing (7) is electrically connected to a ground potential of the electronic device, and
the lid (81) is electrically connected to the casing (7) when the lid is in the close position.

18. A medium casing device comprising:
casing (7) configured to carry a storage medium (S) therein, the casing (7) having an insertion opening (7A) for inserting the storage medium, and at least a part of the casing (7) being conductive; and
a lid (81) configured to take an open position with the insertion opening (7A) opened and a close position with the insertion opening (7A) closed, at least a part of the lid being conductive, wherein
the lid (81) is electrically connected to the casing (7) when the lid is in the close position.
